(19) Europäisches Patentamt
European Patent Office
Office européen des brevets

(11) Publication number: 0 036 959
B1

(12) **EUROPEAN PATENT SPECIFICATION**

(45) Date of publication of patent specification: **21.11.85**

(51) Int. Cl.$^4$: **C 08 L 71/00**, C 08 L 71/04, C 08 L 81/06, C 08 L 67/02

(21) Application number: **81101520.5**

(22) Date of filing: **03.03.81**

(54) **Filled poly(aryl ether) compositions and articles molded therefrom.**

(30) Priority: **04.03.80 US 127094**

(43) Date of publication of application:
**07.10.81 Bulletin 81/40**

(45) Publication of the grant of the patent:
**21.11.85 Bulletin 85/47**

(84) Designated Contracting States:
**AT BE CH DE FR GB IT LI NL SE**

(56) References cited:
**DE-A-2 046 963**

**CHEMICAL ABSTRACTS, vol. 84, 1974, page 33, abstract 90983j, Columbus, Ohio, USA**

(73) Proprietor: **UNION CARBIDE CORPORATION**
**Old Ridgebury Road**
**Danbury Connecticut 06817 (US)**

(72) Inventor: **Snedeker, Robert Howard**
**2718 Custer Street**
**Piscataway 08854 New Jersey (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 036 959 B1

**Description**

This invention relates to a molding composition comprising a blend of a poly(aryl ether) resin, a thermoplastic polyalkylene terephthalate resin and a mineral filler.

Poly(aryl ether) resins are tough, rigid, high strength thermoplastics which maintain their properties over a wide temperature range of from −100°C (−150°F) to above 150°C (300°F). They have a high continuous use temperature of about 150°C (300°F). They are hydrolytically stable and have excellent mechanical and electrical properties which allow them to be molded into a variety of articles. Poly(aryl ether) resins, particularly polysulfone, are especially suited for molding into microwave cookware because of their low microwave absorption, food resistance, excellent toughness and rigidity over a wide range of temperatures, odor and stain resistance, and dishwashability. Also, these poly(aryl ether) resins are readily fabricable into a variety of shapes as is required for microwave cookware.

Mineral filled poly(aryl ether) resin compositions are also used for molding into microwave cookware, since the compositions have the additional advantages of increased rigidity and chemical resistance, as well as lower cost, as compared to using the poly(aryl ether) resin composition without filler.

However, under the conditions of molding of the mineral filled poly(aryl ether) resins, the surface of the resultant molded article has a tendency to be characterized by a splashed appearance known as splay. Under magnification, splay appears as numerous tiny ridges, channels, or elongated bubbles at or near the surface of the molded article in the direction the resin flows to produce the molded article. Under normal inspection of a molded article, splay appears as a rough textured surface characterized by flow marks. Splay is most apparent when the molded article is dark in color.

Many techniques have been tried to reduce or eliminate splay, including viscosity depressants, coupling agents and moisture scavengers. Also, variations in the molding process were tried in order to reduce splay. However, none of these techniques provides a systematic relief from splay.

It has now been discovered that when certain thermoplastic polyalkylene terephthalate resins are added to a mineral filled poly(aryl ether) resin, splay of the resultant molded article is reduced or virtually eliminated. Also, the addition of the polyalkylene terephthalate resin to the mineral filled poly(aryl ether) resin facilitates moldability, and the toughness and chemical resistance of a molded article, produced from such a composition, are enhanced.

US - A - 3,742,087 describes thermoplastic blends which contain from 99.9 to 1 percent of one or more aromatic polysulfones, and from 0.1 to 99 percent of one or more thermoplastic polyesters and optionally a filler. These blends are stated to have a desirable combination of physical properties and better flow properties than the polysulfones themselves.

The patent exemplifies blends of polysulfone with varying amounts of polyesters, including polyethylene terephthalate. However, this patent does not describe nor suggest that splay or similar surface effects may be reduced or eliminated when certain filler containing compositions are employed for the production of molded articles.

According to the present invention, the molding compositions exhibiting reduced splay in articles molded therefrom comprise a blend of a poly (aryl ether) resin, from 3 to 25 weight percent of a thermoplastic polyalkylene terephthalate resin having an intrinsic viscosity of from 0.2 to 1.2 dl/g as measured in o-chlorophenol at 25°C and a mineral filler, wherein the polyalkylene terephthalate is used in an amount which is approximately equal to or greater than the amount of filler.

This invention is also directed to molded articles, especially for microwave cooking, produced from said compositions.

The poly(aryl ether) resin may be described as a linear, thermoplastic polyarylene polyether wherein the arylene units are interspersed with ether, sulfone or ketone linkages. These resins may be obtained by reaction of an alkali metal double salt of a dihydric phenol and a dihalobenzenoid or dinitrobenzenoid compound, either or both of which contain a sulfone or a ketone linkage, i.e., $—SO_2—$ or $CO_1—$, between arylene groupings, to provide sulfone or ketone units in the polymer chain in addition to arylene units and ether units. The polymer has a basic structure comprising recurring units of the formula

$$O—E—O—E'—$$

wherein E is the residuum of the dihydric phenol and E' is the residuum of the benzenoid compound having an inert electron withdrawing group in at least one of the positions ortho and para to the valence bonds; both of said residua are valently bonded to the ether oxygens through aromatic carbon atoms. Such aromatic polyethers are included within the class of polyarylene polyether resins described in US - A - 3,264,536. It is preferred that the dihydric phenol be a weakly acidic dinuclear phenol such as, for example, the dihydroxy diphenyl alkanes or the nuclear halogenated derivatives thereof, such as, for example, the 2,2-bis(4-hydroxyphenyl)propane, 1,1-bis(4-hydroxyphenyl)2-phenyl ethane, bis(4-hydroxyphenyl)methane, or their chlorinated derivatives containing one or two chlorines on each aromatic ring. While these halogenated bisphenolic alkanes are more acidic than the non-halogenated bisphenols and hence slower in reacting in this process, they do impart valuable flame resistance to these polymers. Other materials also termed appropriately "bisphenols" are also highly valuable and preferred. These materials are the bisphenols of a symmetrical or unsymmetrical joining group, as, for example, ether oxygen (—O—), carbonyl

$$(-\overset{O}{\overset{\|}{C}}-),$$

sulfide (—S—), sulfone

$$(-\overset{O}{\overset{\|}{\underset{O}{\underset{\|}{S}}}}-),$$

or hydrocarbon residue in which the two phenolic nuclei are joined to the same or different carbon atoms of the residue.

Such dinuclear phenols can be characterized as having the structure:

$$\mathrm{HO}(\underset{}{\overset{(A_1)_a}{\overset{|}{Ar}}}-R_1-\overset{(A_2)_b}{\overset{|}{Ar}})\mathrm{OH}$$

wherein Ar is an aromatic group and preferably is a phenylene group, $A_1$ and $A_2$ can be the same or different inert substituent groups as alkyl groups having from 1 to 4 carbon atoms, halogen atoms, i.e. fluorine, chlorine, bromine or iodine, or alkoxy radicals having from 1 to 4 carbon atoms, a and b are integers having a value from 0 to 4, inclusive, and $R_1$ is representative of a bond between aromatic carbon atoms as in dihydroxy-diphenyl, or is a divalent radical, including for example, radicals such as

$$-\overset{O}{\overset{\|}{C}}-,$$

—O—, —S—, —SO—, —S—S—, —$SO_2$—, and divalent hydrocarbon radicals containing preferably 1 to 7 carbon atoms, such as alkylene, alkylidene, cycloalkylene, cycloalkylidene, or the halogen, alkyl, aryl or like substituted alkylene, alkylidene and cycloaliphatic radicals as well as aromatic radicals e.g. phenyl and rings fused to both Ar groups.

Examples of specific dihydric polynuclear phenols include among others: the bis-(hydroxylphenyl)alkanes such as 2,2-bis-(4-hydroxyphenyl)propane, 2,4′-dihydroxydiphenyl-methane, bis-(2-hydroxyphenyl)methane, bis-(4-hydroxyphenyl)methane, bis(4-hydroxy-2,6-dimethyl-3-methoxyphenyl)-methane, 1,1-bis-(4-hydroxyphenyl)ethane, 1,2-bis-(4-hydroxyphenyl)ethane, 1,1-bis-(4-hydroxy-2-chlorophenyl)ethane, 1,1-bis-(3-methyl-4-hydroxyphenyl)propane, 1,3-bis-(3-methyl-4-hydroxyphenyl)propane, 2,2-bis-(3-phenyl-4-hydroxyphenyl)propane, 2,2-bis-(3-isopropyl-4-hydroxyphenyl)propane, 2,2-bis-(2-isopropyl-4-hydroxyphenyl)propane, 2,2-bis-(4-hydroxynaphthyl)-propane, 2,2-bis-(4-hydroxyphenyl)-pentane, 3,3-bis-(4-hydroxyphenyl)pentane, 2,2-bis-(4-hydroxyphenyl) heptane, bis-(4-hydroxyphenyl)-phenylmethane, 2,2-bis-(4-hydroxyphenyl)-1-phenyl-propane and 2,2-bis-(4-hydroxyphenyl) 1,1,1,3,3,3-hexafluoropropane; di(hydroxyphenyl)sulfones such as bis-(4-hydroxyphenyl), sulfone, 2,4′-dihydroxy-diphenyl sulfone, 5-chloro-2,4′-dihydroxydiphenyl sulfone and 5′-chloro-4,4′-dihydroxydiphenyl sulfone; di(hydroxyphenyl)ethers such as bis-(4-hydroxyphenyl)ether, the 4,3′-, 4,2′-, 2,2′-, 2,3′-, dihydroxy-diphenyl ethers, 4,4′-dihydroxy-2,6-dimethyldiphenyl ether, bis-(4-hydroxy-3-isobutylphenyl) ether, bis-(4-hydroxy-3-isopropylphenyl) ether, bis-(4-hydroxy-3-chlorophenyl) ether, bis-(4-hydroxy-3-fluorophenyl) ether, bis-(4-hydroxy-3-bromophenyl) ether, bis-(4-hydroxynaphthyl) ether, bis-(4-hydroxy-3-chloro-naphthyl) ether and 4,4′-dihydroxy-3,6-dimethoxydiphenyl ether.

As herein used the E term defined as being the "residuum of the dihydric phenol" of course refers to the residue of the dihydric phenol after the removal of the two aromatic hydroxyl groups. Thus as is readily seen these polyarylene polyethers contain recurring groups of the residuum of the dihydric phenol and the residuum of the benzenoid compound bonded through aromatic ether oxygen atoms.

Any dihalobenzenoid or dinitrobenzenoid compound or mixtures thereof can be employed in this invention which compound or compounds has the two halogens or nitro-groups bonded to benzene rings having an electron withdrawing group in at least one of the positions ortho and para to the halogen or nitro-group. The dihalobenzenoid or dinitrobenzenoid compound can be either mononuclear where the halogens or nitro-groups are attached to the same benzenoid ring or polynuclear where they are attached to different benzenoid rings, as long as there is an activating electron withdrawing group in the ortho or para position of that benzenoid nucleus. Fluorine and chlorine substituted benzenoid reactants are preferred; the fluorine compounds for fast reactivity and the chlorine compounds for their inexpensiveness. Fluorine substituted benzenoid compounds are most preferred, particularly when there is a trace of water present in the polymerization reaction system. However, this water content should be maintained below 1% and preferably below 0.5% for best results.

Any electron withdrawing group can be employed as the activator group in these compounds. It should be, of course, inert under the reaction conditions, but otherwise its structure is not critical. Preferred

are the strong activating groups such as the sulfone group

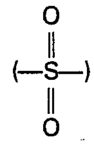

bonding two halogen or nitro substituted benzenoid nuclei as in the 4,4′-dichlorodiphenyl sulfone and 4,4′-difluorodiphenyl sulfone, although such other strong withdrawing groups hereinafter mentioned can also be used with equal ease.

The more powerful of the electron withdrawing groups give the fastest reactions and hence are preferred. It is further preferred that the rings contain no electron supplying groups on the same benzenoid nucleus as the halogen or nitro group; however, the presence of other groups on the nucleus or in the residuum of the compound can be tolerated. Preferably, all of the substituents on the benzenoid nucleus are either hydrogen (zero electron withdrawing), or other groups having a positive sigma value, as set forth in J. F. Bunnett in Chem. Rev. *49,* 273 (1951) and Quart. Rev., *12,* 1 (1958). See also Taft, *Steric Effects in Organic Chemistry,* John Wiley & Sons (1956), chapter 13; *Chem. Rev.,* 53, 222; *JACS,* 74, 3120; and *JACS, 75,* 4231.

The activating group can be basically either of two types:

(a) monovalent groups that activate one or more halogens or nitro-groups on the same ring such as another nitro or halo group, phenylsulfone, or alkylsulfone containing preferably 1 to 7 carbon atoms, cyano, trifluoromethyl, nitroso, and hetero nitrogen as in pyridine.

(b) divalent group which can activate displacement of halogens on two different rings, such as the sulfone group

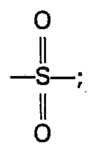

the carbonyl group

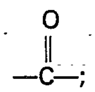

the vinylene group

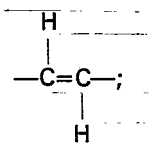

the sulfoxide group

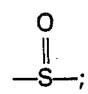

the azo-group —N=N—; the saturated fluorocarbon groups $-CF_2CF_2-$; organic phosphine oxides

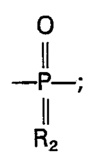

where $R_2$ is a hydrocarbon group containing preferably 1—24 carbon atoms, and the ethylidene group

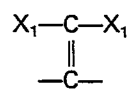

where $X_1$ can be hydrogen or halogen and activating groups within the nucleus which can activate halogens as nitro functions on the same ring such as in the case with e.g. difluorobenzoquinone and 1,4- or 1,5- or 1,8-difluoro-anthraquinone.

If desired, the polymers may be made with mixtures of two or more dihalobenzenoid or dinitrobenzenoid compounds. Thus, the E′ residuum of the benzenoid compounds in the polymer structure may be the same or different.

It is seen also that as used herein, the E′ term defined as being the "residuum of the benzenoid

compound" refers to the aromatic or benzenoid residue of the compound after the removal of the halogen atom or nitro group on the benzenoid nucleus.

The polyarylene polyethers used in the compositions of this invention are prepared by methods well known in the art as for instance the substantially equimolar one-step reaction of a double alkali metal salt of dihydric phenol with a dihalobenzenoid compound in the presence of specific liquid organic sulfoxide or sulfone solvents under substantially anhydrous conditions. Catalysts are not necessary for this reaction but the unique facility of these solvents to promote the reaction to a high molecular weight product has now provided the critical tool necessary to secure sufficiently high molecular weight aromatic ether products useful for services heretofore limited to such products as polyformaldehydes and polycarbonates.

The polymers are also prepared in a two-step process in which a dihydric phenol is first converted *in situ* in the primary reaction solvent to the alkali metal salt by the reaction with the alkali metal, the alkali metal hydride, alkali metal hydroxide, alkali metal alkoxide or the alkali metal alkyd compounds. Preferably, the alkali metal hydroxide is employed. After removing the water which is present or formed, in order to secure substantially anhydrous conditions, the dialkali metal salts of the dihydric phenol is admixed and reacted with about stoichiometric quantities of the dihalobenzenoid or dinitrobenzenoid compound.

The polymerization reaction proceeds in the liquid phase of a sulfoxide or sulfone organic solvent at elevated temperatures.

A preferred form of the polyarylene polyethers of this invention are those prepared using the dihydric polynuclear phenols of the following four types, including the derivatives thereof which are substituted with inert substituent groups

(a) 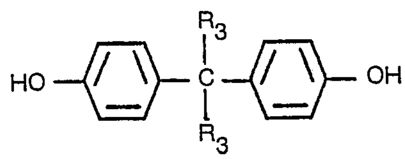

in which the $R_3$ group represents independently hydrogen, lower alkyl containing 1 to 6 carbon atoms, lower aryl and the halogen substituted groups thereof, which can be the same or different;

(b) 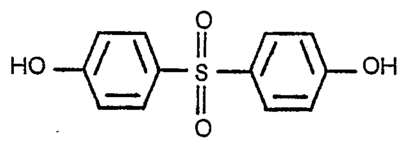

(c) 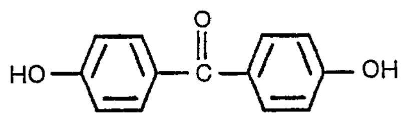

(d) 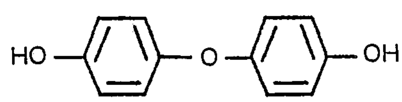

and substituted derivatives thereof.

It is also contemplated in this invention to use a mixture of two or more different dihydric phenols to accomplish the same ends as above. Thus when referred to above the —E— residuum in the polymer structure can actually be the same or different aromatic residua.

In order to secure the high polymers, the system should be substantially anhydrous, and preferably with less than 0.5 per cent by weight water in the reaction mixtures.

The poly(aryl ether)s have a reduced viscosity of from 0.4 to 1.5 dl/g as measured in an appropriate solvent at an appropriate temperature depending on the particular polyether, such as in methylene chloride at 25°C.

The preferred poly(aryl ether)s have repeating units of the formula:

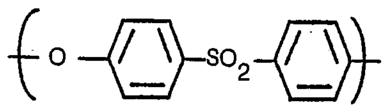
,

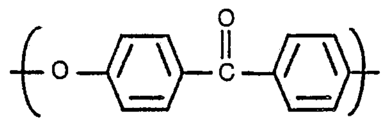
, and

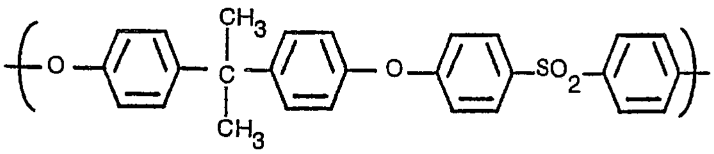

The polyalkylene terephthalate resin can be any resin comprising a high molecular weight poly(1,4-alkylene-terephthalate) having repeating units of the general formula

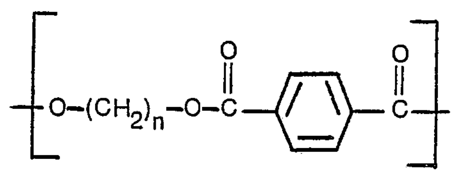

n being a number of from 1 to 50 preferably 1 to 10. The poly(1,4-alkylene terephthalate resins can contain mixtures thereof, including copolyesters, i.e., esters that contain a minor amount, e.g., from 0.5 to 2% by weight, of repeating units derived from an aliphatic or another aromatic dicarboxylic acid and/or another aliphatic diol or polyol. Among the units which can be present in the copolyesters are those derived from aliphatic dicarboxylic acids, e.g., acids having up to 50 carbon atoms, including cycloaliphatic, straight and branched chain acids, such as adipic acid, cyclohexane-diacetic acid, dimerized $C_{16-18}$ unsaturated acids (which have 32 to 36 carbon atoms) and trimerized such acids. Among the units in the copolyesters can also be minor amounts derived from aromatic dicarboxylic acids, e.g., acids having up to 36 carbon atoms, such as isophthalic acid.

The polyalkylene terephthalate resins, including copolyesters, can be made by techniques well known to those skilled in the art including techniques taught by, for example, US - A - 2,465,319 and 3,047,539.

According to the invention the polyalkylene terephthalates have an intrinsic viscosity of from 0.2 to 1.2, preferably greater than 0.8 deciliters per gram as measured in o-chlorophenol at 25°C.

The preferred polyalkylene terephthalates are poly(ethylene terephthalate) and poly(butylene terephthalate).

The fillers suitable for use herein include e.g. wollastonite, calcium carbonate, feldspar, or mixtures thereof.

It should, of course, be obvious to those skilled in the art that other additives may be included in the present compositions. These additives include e.g. plasticizers, pigments, flame retardant additives, particularly thermal stabilizers, ultraviolet light stabilizers, and processing aids.

The compositions of this invention are prepared by any conventional mixing methods. For example, a preferred method comprises mixing the poly(aryl ether) resin, filler and the polyalkylene terephthalate resin in powder or granular form in an extruder, extruding the mixture into strands, chopping the strands into pellets and molding the pellets into the desired article.

## Examples

The following examples serve to give specific illustrations of the practice of this invention.

### Control A

89 parts of a poly(aryl ether) of the following formula:

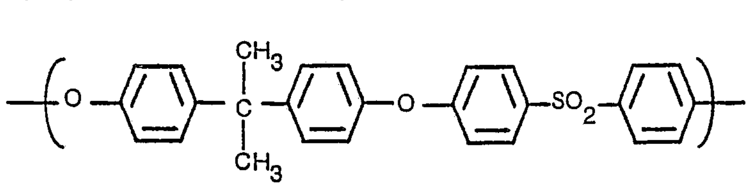

having a reduced viscosity of 0.59 dl/g as measured in chloroform (0.2 gram polymer in 100 ml at 25°C), 10 parts of particulate wollastonite and 1 part of a brown pigment composition containing iron oxides and

carbon black were blended and then dried for 16 hours in an oven at 135—149°C (275—300°F).

The materials were then compounded in a single screw 2.5 cm (1 inch) extruder at about 288°C (550°F). The resulting compound was pelletized. The pellets were dried for 16 hours in an oven at 135—149°C (275—300°F). The pellets were injection molded into specimens at a temperature of about 315°C (600°F) and pressures of 900—1035 bar (13,000 to 15,000 psi).

The molded article exhibited a substantial amount of splay.

Control B

The procedure of Control A was exactly repeated except that calcium carbonate filler was used instead of the wollastonite.

The molded article produced exhibited a substantial amount of splay.

Example 1

79 parts of the poly(aryl ether) described in Control A, 10 parts of particulate wollastonite, 1 part of a brown pigment composition containing iron oxide and carbon black and 10 parts of poly(ethylene terephthalate) having an intrinsic viscosity of 1.04 dl/g (as measured in o-chlorophenol at 25°C) were compounded into pellets and the pellets injection molded into test specimens as described in Control A.

The molded article produced was virtually splay-free and had a glossy homogeneous appearance.

Example 2

The procedure of Example 1 was exactly repeated except that calcium carbonate filler was used instead of the wollastonite.

The molded article produced was virtually splay-free.

Example 3

83 parts of the poly(aryl ether) described in Control A, 10 parts of particulate wollastonite, 1 part of a brown pigment composition containing iron oxides and carbon black, and 6 parts of the poly(ethylene terephthalate) described in Example 1 were compounded into pellets and the pellets injection molded into test specimens as described in Control A.

The molded article produced exhibited splay resistance although some splay was evident.

Example 4

84.5 parts of the poly(aryl ether) described in Control A, 10 parts of particulate wollastonite, 1 part of a brown pigment composition containing iron oxides and carbon black, and 4.5 parts of the poly(ethylene terephthalate) described in Example 1 were compounded into pellets and the pellets injection molded into test specimens as described in Control A.

The molded article produced exhibited some evidence of splay.

Example 5

68 parts of the poly(aryl ether) described in Control A, 16 parts of particulate wollastonite, 1 part of a brown pigment composition containing iron oxides and carbon black, and 15 parts of the poly(ethylene terephthalate) described in Example 1 were compounded into pellets and the pellets injection molded into test specimens as described in Control A.

The molded article produced was virtually splay-free.

Example 6

72 parts of the poly(aryl ether) described in Control A, 15 parts of particulate wollastonite, 1 part of a brown pigment composition containing iron oxides and carbon black and 12 parts of the poly(ethylene terephthalate) described in Example 1 were compounded into pellets and the pellets injection molded into test specimens as described in Control A.

The molded article produced was virtually splay-free.

Example 7

75.5 parts of the poly(aryl ether) described in Control A, 15 parts of particulate wollastonite, 1 part of a brown pigment composition containing iron oxides and carbon black and 8.5 parts of the poly(ethylene terephthalate) described in Example 1 were compounded into pellets and the pellets injection molded into test specimens as described in Control A.

The molded article produced exhibited some evidence of splay.

Example 8

82 parts of the poly(aryl ether) described in Control A, 6 parts of particulate wollastonite, 1 part of a brown pigment composition containing iron oxide and carbon black, and 11 parts of poly(ethylene terephthalate) having an intrinsic viscosity of 0.59 dl/g (as measured in o-chlorophenol at 25°C) were compounded into pellets and the pellets injection molded into test specimens as described in Control A.

The molded article produced was virtually splay-free.

Example 9

82 parts of the poly(aryl ether) described in Control A, 6 parts of particulate wollastonite, 1 part of a brown pigment composition containing iron oxide and carbon black and 11 parts of poly(butylene terephthalate) having an intrinsic viscosity of 1.15 dl/g (as measured in o-chlorophenol at 25°C) were compounded into pellets and the pellets injection moulded into test specimens as described in Control A.

The molded article produced was virtually splay-free.

Example 10

83 parts of the poly(aryl ether) described in Control A, 5 parts of particulate wollastonite, 1 part of a brown pigment composition containing iron oxides and carbon black and 11 parts of the poly(ethylene terephthalate) described in Example 1 were dried for 16 hours in an oven at about 150°C (300°F).

The materials were then compounded in a 6.35 cm (2 1/2 inch) twin-screw extruder at about 288°C (550-F). The resulting compound was pelletized. The pellets were dried for about 4 hours in a dehumidified hopper dryer at about 135°C (275°F).

Several cooking utensils such as sauce pans, trays and bake rings were injection molded from the dried compound at about 315°C (600°F) and pressures of about 1240 bar (18,000 psi).

The molded articles produced were splay-free and had a glossy homogeneous appearance.

Example 11

82 parts of the poly(aryl ether) described in Control A, 6 parts of particulate wollastonite, 1 part of a brown pigment composition containing iron oxides and carbon black and 11 parts of the poly(ethylene terephthalate) described in Example 1 was compounded, without pre-drying, in a 6.35 cm (2 1/2 inch) twin-screw extruder at about 288°C (550°F.). The resulting compound was pelletized. The pellets were dried for 3 to 4 hours in a shallow tray placed in an oven at 162°C (325°F).

Specimens were injection molded from the dried compound at about 315°C (600°F) and pressures of about 900—1035 bar (13,000—15,000 psi).

The molded specimens produced were splay free and had a glossy homogeneous appearance.

The Examples show that when mineral filled poly(aryl ethers) compositions are molded, the resulting molded article exhibits a substantial amount of splay (Controls A and B). Examples 1, 2, 5, 6, 8, 9, 10 and 11 show that when either poly(ethylene terephthalate) or poly (butylene terephthalate) [Example 9] is added to mineral filled poly(aryl ether) compositions, according to the present invention, the resulting molded articles were splay free or virtually so. In these Examples the amount of poly(ethylene terephthalate) or poly(butylene terephthalate) resin added, approached, was equal to, or greater than the amount of filler. Examples 3, 4 and 7 show that when poly(ethylene terephthalate) is added to mineral filled poly(aryl ether) compositions, in amounts substantially less than the amount of filler, some splaying is evident in the resulting molded article, but the splay is less than that which results without adding poly(alkylene terephthalate).

Example 10 demonstrates that splay-free cookware articles can be molded from the compositions of this invention. Example 11 demonstrates that pre-drying of the components of the compositions of this invention before compounding is not necessary in order to mold splay-free specimens.

**Claims**

1. A molding composition exhibiting reduced splay in articles molded therefrom comprising a blend of a poly(arylether) resin, from 3 to 25 weight percent of a thermoplastic polyalkylene terephthalate resin having an intrinsic viscosity of from 0.2 to 1.2 dl/g as measured in o-chlorophenol at 25°C and a mineral filler, wherein the polyalkylene terephthalate is used in an amount which is approximately equal to or greater than the amount of filler.

2. A composition as defined in claim 1 wherein the poly (arylether) is composed of recurring units of the formula:

O—E—O—E'—

wherein E is the residuum of a dihydric phenol and E' is the residuum of a benzenoid compound having an inert electron withdrawing group.

3. A composition as defined in claim 1 or 2 wherein the poly(arylether) has repeating units of the formula:

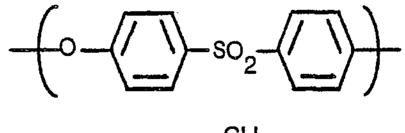

or

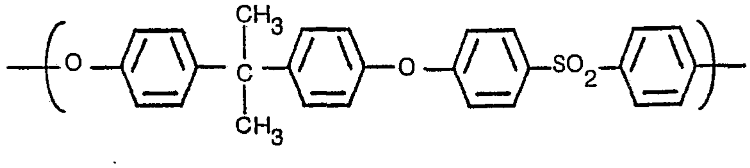

4. A composition as defined in any of claims 1 to 3, wherein the polyalkylene terephthalate is poly(ethylene-terephthalate) or poly(butylene terephthalate).

5. A composition as defined in any of claims 1 to 4 wherein the filler is wollastonite or calcium carbonate.

6. A molded article produced from the composition of any of claims 1 to 5.

7. A microwave cooking utensil molded from the composition of any of claims 1 to 5.

**Patentansprüche**

1. Formzusammensetzung, die in den daraus geformten Gegenständen eine verminderte Oberflächenunebenheit zeigt, enthaltend eine Mischung aus einem Poly(arylether)harz, 3 bis 25 Gew.-% eines thermoplastischen Polyalkylenterephthalatharzes mit einer Grenzviskosität von 0,2 bis 1,2 dl/g, gemessen in o-Chlorphenol bei 25°C und einem Mineralfüller, worin das Polyalkylenterephthalat in einer Menge verwendet wird, die etwa gleich der oder größer ist als die Menge des Füllers.

2. Zusammensetzung nach Anspruch 1, in welcher der Poly(arylether) aus wiederkehrenden Einheiten der Formel

O—E—O—E'—

zusammengesetzt ist, worin E der Rest eines zweiwertigen Phenols ist und E' der Rest einer Benzoidverbindung mit einer inerten elektronabziehenden Gruppe ist.

3. Zusammensetzung nach Anspruch 1 oder 2, in welcher der Poly(arylether) wiederkehrende Einheiten der Formel

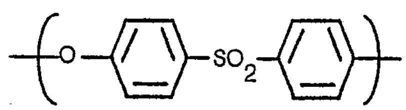 oder

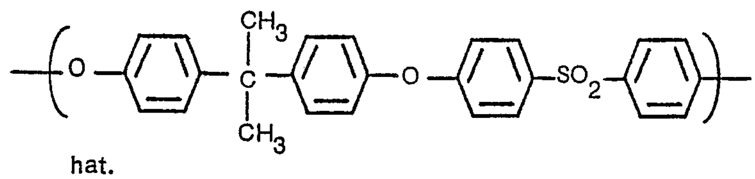

hat.

4. Zusammensetzung nach einem der Ansprüche 1 bis 3, in welcher das Polyalkylenterephthalat Poly-(ethylenterephthalat) oder Poly-(butylenterephthalat) ist.

5. Zusammensetzung nach einem der Ansprüche 1 bis 4, in welcher der Füller Wollastonit oder Calciumcarbonat ist.

6. Geformter Gegenstand, hergestellt aus der Zusammensetzung nach einem der Ansprüche 1 bis 5.

7. Kochutensil für Mikrowellenherde, geformt aus einer Zusammensetzung nach einem der Ansprüche 1 bis 5.

**Revendications**

1. Composition à mouler conférant un aspect éclaboussé réduit à des articles moulés à partir de cette composition, comprenant un mélange d'une résine du type poly(éther d'aryle), 3 à 25% en poids d'une résine du type polytéréphtalate d'alkylène thermoplastique ayant une viscosité intrinsèque de 0,2 à 1,2 dl/g mesurée dans le o-chlorophénol à 25°C et une charge minérale, le polytéréphtalate d'alkylène étant utilisé en une quantité qui est approximativement égale ou supérieure à la quantité de charge.

2. Composition suivant la revendication 1, dans laquelle le poly(éther d'aryle) est composé de motifs récurrents de formule:

O—E—O—E'—

dans laquelle E est le résidu d'un phénol dihydroxylique et E' est le résidu d'un composé benzénique portant un groupe électro-attractif inerte.

3. Composition suivant la revendication 1 ou 2, dans laquelle le poly(éther d'aryle) porte des motifs répétés de formule

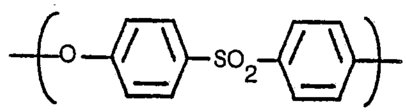

ou

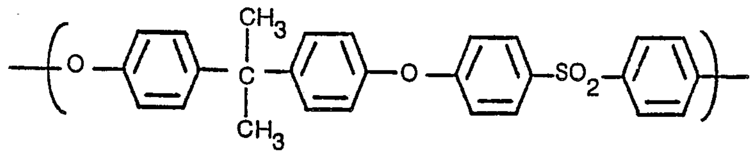

4. Composition suivant l'une quelconque des revendications 1 à 3, dans laquelle le polytéréphtalate d'alkylène est un poly(téréphtalate d'éthylène) ou un poly(téréphtalate de butylène).

5. Composition suivant l'une quelconque des revendications 1 à 4, dans laquelle la charge consiste en wollastonite ou en carbonate de calcium.

6. Article moulé produit à partir de la composition suivant l'une quelconque des revendications 1 à 5.

7. Ustensile de cuisson par micro-ondes moulé à partir de la composition suivant l'une quelconque des revendications 1 à 5.